(19) Europäisches Patentamt

European Patent Office

Office européen des brevets

(11) **EP 0 884 230 B1**

(12) **EUROPÄISCHE PATENTSCHRIFT**

(45) Veröffentlichungstag und Bekanntmachung des Hinweises auf die Patenterteilung:
**10.03.2004  Patentblatt 2004/11**

(51) Int Cl.$^7$: **B60T 8/00**

(21) Anmeldenummer: **98110570.3**

(22) Anmeldetag: **09.06.1998**

(54) **Verfahren zum Ermitteln der Giergeschwindigkeit eines Fahrzeugs**

Method for calculating the yaw rate of a vehicle

Procédé donant la vitesse de lacet d'un véhicule

(84) Benannte Vertragsstaaten:
**DE ES FR GB**

(30) Priorität: **12.06.1997  DE 19724955**

(43) Veröffentlichungstag der Anmeldung:
**16.12.1998  Patentblatt 1998/51**

(73) Patentinhaber: **SIEMENS AKTIENGESELLSCHAFT
80333 München (DE)**

(72) Erfinder:
- **Hoppstock, Reiner, Dr.
  80997 München (DE)**
- **Kirchberger, Andreas
  93161 Sinzing (DE)**

(56) Entgegenhaltungen:
**EP-A- 0 672 554            EP-A- 0 711 699
WO-A-89/04783            DE-A- 19 628 486**

**Beschreibung**

Die Erfindung betrifft ein Verfahren zum Ermitteln der Giergeschwindigkeit eines Fahrzeugs nach dem Oberbegriff des Patentanspruchs 1. Insbesondere soll die Giergeschwindigkeit für eine adaptive Fahrgeschwindigkeitsregelung ermittelt werden.

Es ist ein System zum Regeln der Fahrstabilität eines Kraftfahrzeuges bekannt (DE 44 36 162 C1), bei dem einem Steuergerät nicht nur die von Sensoren gemessenen Raddrehzahlen zugeführt werden, um davon abhängig die auf die einzelnen Räder einwirkenden Bremsdrücke zu steuern, sondern das Steuergerät noch weitere Signale eines Lenkwinkelsensors und eines Giergeschwindigkeitssensors erhält, um den Fahrzustand des Kraftfahrzeuges stabil zu halten. In diesem Zusammenhang ist es auch bekannt, die Giergeschwindigkeit, also die Drehung des Fahrzeugs um die Hochachse, nicht in einem Sensor zu messen, sondern vielmehr rechnerisch zu ermitteln, nämlich beispielsweise aus den Raddrehzahlen der beiden Vorder- oder Hinterräder, oder auch aus dem Lenkradwinkel und einer Raddrehzahl.

Mathematische Ableitungen für den Lenkradeinschlag, die Giergeschwindigkeit sowie von weiteren Funktionen bei einer stationären Kreisfahrt eines Fahrzeugs auf einem konstanten Radius mit konstanter Fahrgeschwindigkeit sind in M. Mitschke "Dynamik der Kraftfahrzeuge" Bd. C, Fahrverhalten, 2. Aufl., Springer-Verlag, S. 31-39, dargestellt. Die Funktionen sind von den Fahrzeugdaten, wie Masse m, Radstand l und andererseits von den Lenkungsdaten wie Lenkeinschlagswinkel, Lenkübersetzung, bestimmt. Aus diesen Ableitungen geht auch hervor, daß eine Reihe von Fahrzeug- und Lenkungsdaten zu einer "charakteristischen Fahrgeschwindigkeit" $v_{ch}$ zusammengefaßt werden. Mit dem im Schrifttum angegebenen Gleichungen kann die Giergeschwindigkeit nicht mit einer oft wünschenswert hohen Genauigkeit bestimmt werden. So kann der Reifendruck wie auch die Reifenabnutzung an den verschiedenen Rädern unterschiedlich sein. Ferner wird das Fahrverhalten durch Seitenwind sowie durch Lenkeinschlagskorrekturen z.B. bei hängender Straße beeinflußt.

Aus der Druckschrift EP 0 711 699A2 ist ein Verfahren zum Ermitteln der Giergeschwindigkeit eines Fahrzeugs aus den von Raddrehzahlsensoren an einem rechten und linken, nicht angetriebenen Rad gemessenen Radgeschwindigkeiten bekannt. Dabei wird die Giergeschwindigkeit des Fahrzeugs aus einem Vergleich der Meßgrößen von rechter Radgeschwindigkeit und linker Radgeschwindigkeit ermittelt.

Ein Verfahren zur Korrektur der Fehler, die wegen unterschiedlichen Raddurchmessern bei Kontrollsystemen auftreten können ist aus der Druckschrift EP 0 672 554 A1 bekannt. Dabei wird zunächst festgestellt, ob das Fahrzeug geradeaus fährt und anschließend die Radgeschwindigkeit mit einem Korrekturfaktor korrigiert.

Will man auch geringe Giergeschwindigkeiten mit hoher Genauigkeit ermitteln, so erfolgt dies üblicherweise mit Giergeschwindigkeitssensoren, wie sie für die Flugzeugnavigation entwickelt worden sind. Solche Sensoren sind sehr teuer und sind außerdem temperaturempfindlich, zeigen meist eine Temperaturdrift von bis zu 1°/s.

Der Erfindung liegt somit die Aufgabe zugrunde, die Giergeschwindigkeit eines Fahrzeugs mit hoher Genauigkeit aus den Radgeschwindigkeiten zu berechnen.

Die genannte Aufgabe ist erfindungsgemäß mit den Merkmalen des Patentanspruchs 1 gelöst.

Erfindungsgemäß werden die von Raddrehzahl-Sensoren gemessenen Radgeschwindigkeiten der beiden überwachten, nicht angetriebenen Räder, so des linken und rechten Vorderrades bei Heckantrieb, mit einem Korrekturfaktor korrigiert, der bei Geradeausfahrt des Fahrzeugs ermittelt wird und der somit in der Lage ist, unterschiedliche Reifendrücke, unterschiedliche Reifenabnutzung, Lenkwinkeleinschlag infolge hängender Strasse, Seitenwind sowie anderen Faktoren zu eliminieren. Die Giergeschwindigkeit läßt sich somit sehr genau berechnen.

Mit dem erfindungsgemäßen Verfahren läßt sich in vorteilhafter Weise eine adaptive Fahrgeschwindigkeitsregelung realisieren. Dabei wird mit einem Abstandssensor die Geschwindigkeit und der Abstand eines Fahrzeugs zum vorausfahrenden Fahrzeug ermittelt. Um festzustellen, ob sich ein anderes Fahrzeug auf der eigenen Fahrspur befindet, also im Zusammenhang mit Überholvorgängen und Spurwechsel, muß eine Fahrspur-Prädiktion vorgenommen werden, wozu die Giergeschwindigkeit des eigenen Fahrzeugs benötigt wird. Um eine gute Fahrspur-Prädiktion zu erreichen, muß die Giergeschwindigkeit mit etwa +/- 0,2°/s ermittelt werden, da bei üblichen Fahrzuständen auf der Autobahn nur kleine Giergeschwindigkeiten von + 5°/s bis - 5°/s auftreten und das Maximum bei etwa +/- 20°/s liegt.

Hier bietet die Erfindung eine kostengünstige Lösung, indem die ohnehin bei einem Antiblockierschutz vorgesehenen Raddrehzahlsensoren die Meßwerte für die Berechnung der Giergeschwindigkeit und des Korrekturfaktors liefern.

Vorteilhafte Weiterbildungen der Erfindung sind in den Unteransprüchen gekennzeichnet.

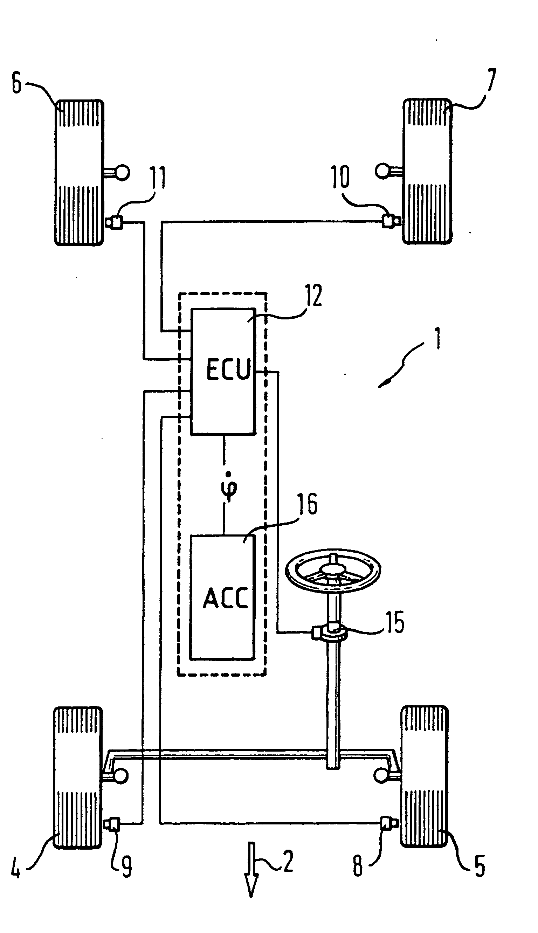

Ein Ausführungsbeispiel der Erfindung ist nachstehend anhand der Zeichnung näher erläutert, in der ein Kraftfahrzeug mit einer adaptiven Fahrgeschwindigkeitsregelung dargestellt ist.

Ein Kraftfahrzeug 1, dessen Fahrtrichtung durch einen Pfeil 2 angedeutet ist, weist vier Räder 4, 5, 6 und 7 auf. Jedem Rad ist ein Raddrehzahlsensor 8 (vorne links), 9 (vorne rechts), 10 (hinten links) und 11 (hinten rechts) zugeordnet. Die von diesen Sensoren gelieferten Signale gelangen über aus der Zeichnung ersichtliche Signalleitungen zu einem Steuergerät 12 und werden dort ausgewertet. Das Steuergerät 12 erzeugt Stellsignale, mit denen der auf die einzelnen Räder einwirkende Bremsdruck gesteuert wird. Das Steuergerät kann als Antiblockiersystem (ABS) auch in Kombination mit einem Antriebsschlupfregelungssystem (ASR) ausgebildet sein. Solche Systeme sind in vielfacher Ausführung bekannt (z.B. DE 44 36 162 C1). Dem Steuergerät 12 wird ferner der Lenkradwinkel zugeführt, der von einem Sensor 15 gemessen wird.

An das Steuergerät 12 ist ferner ein adaptiver Fahrgeschwindigkeitsregler 16 angeschlossen, der die Giergeschwindigkeit des Fahrzeugs auswerten muß, um zu erkennen, auf welcher Fahrspur sich das Fahrzeug befindet, oder ob beabsichtigt ist, die Fahrspur zu wechseln.

Zur Berechnung der Giergeschwindigkeit aus den Radgeschwindigkeitssignalen gilt folgende Gleichung

$$g_{ABS} = \frac{2 * v * \left( \dfrac{v_r}{v_l} - q \right)}{I_{SW} * \left( \dfrac{v_r}{v_l} + q \right) * \left( 1 + \left( \dfrac{v}{v_{chABS}} \right)^2 \right)} \; ;$$

mit

$g_{ABS}$ :   Giergeschwindigkeit aus ABS-Signalen (Radgeschwindigkeiten)
$I_{SW}$ :   Spurweite der Vorderachse
$V_{ch\,ABS}$ :   Charakteristische Geschwindigkeit (ABS-Signale)

$$v = \frac{v_l + v_r}{2}$$

$v$ :   Geschwindigkeit
$v_l$ :   Geschwindigkeit linkes Vorderrad (nicht angetrieben)
$v_r$ :   Geschwindigkeit rechtes Vorderrad (nicht angetrieben)

q ist ein Korrekturfaktor

$$q = \frac{v_{r_g}}{v_{l_g}}$$

mit $v_{rg}$ und $v_{lg}$ Geschwindigkeit der Vorderräder bei Geradeausfahrt.

Aus Gleichung (1) ist ersichtlich, daß das Verhältnis

$$\frac{v}{1 + \left( \dfrac{v}{v_{CH_{ABS}}} \right)}$$

für die Geschwindigkeit mit dem Korrekturglied $(v_r/v_l\text{-}q)/\,(v_r/v_l + q)$ multipliziert wird. Das Korrekturglied besteht somit aus dem Verhältnis der Radgeschwindigkeit für das rechte und linke Vorderrad +/- dem Korrekturfaktor q, der als Verhältnis der Geschwindigkeit der beiden Vorderräder bei Geradeausfahrt ermittelt wird. Mit diesem Korrekturglied wird erfindungsgemäß die Genauigkeit für die Ermittlung der Giergeschwindigkeit des Fahrzeugs wesentlich vergrößert und liegt in der Größenordnung von +/- 0,2°/s.

Der Korrekturfaktor wird nur bei Geradeausfahrt ermittelt. Die Geradeausfahrt des Fahrzeugs wird erkannt, wenn die Fahrgeschwindigkeit über einem vorbestimmten Wert liegt und die Giergeschwindigkeit Null ist oder sich in einem sehr engen Fenster um die Null-Lage befindet. Hierzu ist der Lenkwinkelsensor 15 vorgesehen. Der Korrekturfaktor q wird mit einem Tiefpaß gefiltert, damit kurzzeitige Änderungen des Korrekturfaktors infolge wechselnder Straßenbedingungen o.ä. eliminiert werden. So adaptiert sich die Filterzeit des Tiefpaßes an der Güte des ermittelten Korrekturfaktors.

Der auf diese Weise ermittelte und gefilterte Korrekturfaktor wird laufend überwacht, um festzustellen, ob der Korrekturfaktor noch gültig ist, oder aber sich geändert hat, z.B. wenn ein Reifenwechsel erfolgte. Die Überwachung des Korrekturfaktors erfolgt aus einem Vergleich der Giergeschwindigkeit, die aufgrund der Radgeschwindigkeitssignale ermittelt wird und der Giergeschwindigkeit, die aus einer Messung des Lenkwinkels nach folgender Gleichung ermittelt wird:

$$g_L = \frac{\delta_L * v}{i * l * \left( 1 + \left( \frac{v}{v_{ch_L}} \right)^2 \right)}$$

mit:

$g_L$ : Giergeschwindigkeit aus Lenkwinkel
$\delta_L$ : Lenkradwinkel
$i$ : Lenkübersetzung
$l$ : Radstand
$v_{ch_L}$ : Charakteristische Geschwindigkeit (Lenkwinkel)
$v$ : gemittelte Geschwindigkeit wie in Gleichung (1)

Die Differenz zwischen den beiden auf diese Weise berechneten Giergeschwindigkeiten wird über einen festgelegten Zeitraum hinweg beobachtet. Überschreitet die Differenz einen bestimmten Wert, so ist dies ein Anzeichen dafür, daß der Korrekturfaktor nachgesteuert werden muß. Hierzu wird die Filterzeit des Tiefpaßfilters verkürzt, um einen neuen Korrekturfaktor q zu erhalten und dann wieder langsam bis zum Maximalwert erhöht.

**Patentansprüche**

1. Verfahren zum Ermitteln der Giergeschwindigkeit eines. Fahrzeugs, insbesondere zur adaptiven Fahrgeschwindigkeitsregelung, aus den von Raddrehzahlsensoren an einem rechten und linken, nicht angetriebenen Rad gemessenen Radgeschwindigkeiten, wobei die Giergeschwindigkeit des Fahrzeugs aus einem Vergleich der Meßgrößen von rechter Radgeschwindigkeit $v_r$ und linker Radgeschwindigkeit $v_l$ ermittelt wird, **dadurch gekennzeichnet,**

   - **daß** die Giergeschwindigkeit abhängig von der gemittelten Radgeschwindigkeit v und einer charakteristischen Fahrtgeschwindigkeit $v_{ch}$ aus dem Verhältnis $v/[1+(v/v_{ch})^2]$ berechnet wird, und
   - **daß** dieses Verhältnis mit einem Korrekturglied $(v_r/v_l-q)/(v_r/v_l+q)$ multipliziert wird, wobei ein Korrekturfaktor q als Verhältnis der Geschwindigkeit an dem rechten und linken nichtangetriebenen Rad bei Geradeausfahrt des Fahrzeugs ermittelt wird.

2. Verfahren nach Anspruch 1, **dadurch gekennzeichnet, daß** der Korrekturfaktor q bei Überschreiten einer bestimmten Fahrzeuggeschwindigkeit und bei einem Lenkwinkel von annähernd Null ermittelt wird.

3. Verfahren nach einem der Ansprüche 1 oder 2, **dadurch gekennzeichnet, daß** der Korrekturfaktor q mit einem Tiefpaß gefiltert wird.

4. Verfahren nach Anspruch 3, **dadurch gekennzeichnet, daß** laufend die Differenz der Giergeschwindigkeit aufgrund des Lenkwinkels und aufgrund der Radgeschwindigkeiten ermittelt wird und daß bei Überschreiten eines vorbestimmten Betrages der Differenz der Korrekturfaktor q nachgesteuert wird, indem die Zeitkonstante des Tiefpaßfilters verkürzt wird, um nach Ermittlung des neuen Korrekturfaktors wieder langsam auf einen Maximalwert erhöht zu werden.

**Claims**

1. Method for calculating the yaw rate of a vehicle, in particular for adaptive driving speed control, from the wheel speeds measured by wheel speed sensors on a right and left, non-driven wheel, whereby the yaw rate of the vehicle is calculated from a comparison of the measured variables of right wheel speed $v_r$ and left wheel speed $v_l$, **characterised in that**

   - the yaw rate is calculated on the basis of the mean wheel speed v and a characteristic driving speed $v_{ch}$ from the ratio $v/[1+(v/v_{ch})^2]$ and
   - this ratio is multiplied by a correction element $(v_r/v_l-q)/v_r/v_l+q)$, whereby a correction factor q is calculated as the ratio of the speed at the right and left, non-driven wheels when the vehicle is travelling in a straight line.

2. Method according to Claim 1, **characterised in that** the correction factor q is calculated when a specific vehicle speed is exceeded and when the steering angle is approximately zero.

3. Method according to one of Claims 1 or 2, **characterised in that** the correction factor q is filtered with a low-pass.

4. Method according to Claim 3, **characterised in that** the difference between the yaw rate based on the steering angle and based on the wheel speeds is calculated continuously and that if a predefined total difference is exceeded, the correction factor q is subsequently controlled by shortening the time constant of the low-pass filter in order to increase it again slowly to a maximum value after calculation of the new correction factor.

**Revendications**

1. Procédé pour déterminer la vitesse de lacet d'un véhicule automobile, en particulier pour réguler de façon ajustée automatiquement la vitesse de déplacement, à partir des vitesses de roues, mesurées par des détecteurs de vitesse de rotation de roue, sur une roue de droite et une de gauche, non entraînées, la vitesse de lacet du véhicule automobile étant déterminée à partir d'une comparaison entre les grandeurs de mesure de la vitesse de la roue de droite $v_r$ et de la vitesse de la roue de gauche $v_l$, **caractérisé**

   - **en ce que** la vitesse de lacet est calculée en fonction de la vitesse de roue moyenne v et d'une vitesse de déplacement caractéristique $v_{ch}$, à l'aide du rapport $v/[1+(v/v_{ch})^2]$, et
   - **en ce que** ce rapport est multiplié par un terme de correction $(v_r/v_l-q)/(v_r/v_l+q)$, le facteur de correction q étant déterminé comme le rapport de la vitesse à la roue de droite et à la roue de gauche, non entraînées, au cours d'un déplacement en ligne droite du véhicule automobile.

2. Procédé suivant la revendication 1, **caractérisé en ce que** le facteur de correction q est déterminé, dans le cas de dépassement d'une valeur de vitesse du véhicule automobile définie et dans le cas d'un angle de braquage sensiblement nul.

3. Procédé suivant l'une des revendications 1 ou 2, **caractérisé en ce que** le facteur de correction q est filtré avec un filtre passe-bas.

4. Procédé suivant la revendication 3, **caractérisé en ce que** la différence de vitesse de lacet est déterminée en continu en fonction de l'angle de braquage et en fonction des vitesses de roues, et **en ce qu'**en cas de dépassement d'une valeur prédéfinie de la différence, on commande un nouveau facteur de correction q, de telle façon que la constante de temps du filtre passe-bas soit réduite, pour, après détermination du nouveau facteur de correction, l'augmenter de nouveau lentement pour atteindre une valeur maximale.